# EUROPÄISCHE PATENTANMELDUNG

(11) **EP 2 503 422 A2**
(43) Veröffentlichungstag der Anmeldung: **26.09.2012**
(21) Anmeldenummer: 12158232.4
(22) Anmeldetag: 06.03.2012
(51) Int. Cl.: G05B 19/418

(54) **Verfahren zum Betreiben und Warten eines Wärme- und/oder Kälteerzeugungssystems**

(30) Priorität: 23.03.2011 DE 102011014771
(71) Anmelder: Robert Bosch GmbH, 70442 Stuttgart (DE)
(72) Erfinder: Preussner, Christian, 35041 Marburg (DE); Behnke, Ralf, 91710 Gunzenhausen (DE)

(57) **Zusammenfassung**

Die Erfindung betrifft ein Verfahren zum Betreiben und Warten eines Wärme- und/oder Kälteerzeugungssystems, bestehend aus mehreren Geräten, Komponenten und Zubehörteilen, insbesondere mit mindestens einem Wärmeerzeuger, wobei alle Geräte, Komponenten und Zubehörteile jeweils einzelne, spezifische Wartungsintervalle (W1...W6) aufweisen, welche durch die variierende, verbraucherabhängige Betriebsweise eines Wärme-und/oder Kälteerzeugungssystems über die Zeit variabel sind, wobei mindestens für diese Betriebsweise und aktuelle Betriebszustände charakteristische Geräte, Komponenten und Zubehörteile von einer Konditionsmonitoringeinrichtung überwacht werden, und wobei mindestens eine Systemregeleinrichtung für die übergeordnete Betriebsführung vorgesehen ist.

Der Erfindung liegt daher die Aufgabe zugrunde, ein effektives Verfahren zum Betreiben und Warten eines Wärme- und/oder Kälteerzeugungssystems zu schaffen, mit dem insbesondere sich insbesondere aufwands-, kosten- oder betriebssicherheitsoptimale Wartungspläne ergeben.

Erfindungsgemäß werden auf Basis von kunden- und anlagenspezifischen Informationen in der Systemregeleinrichtung dynamisch optimale Wartungspläne erstellt und angezeigt.

## Beschreibung

Die Erfindung betrifft ein Verfahren zum Betreiben und Warten eines Wärme- und/oder Kälteerzeugungssystems nach dem Oberbegriff des Patentanspruches 1.

Gattungsgemäße Wärme- und/oder Kälteerzeugungssysteme sind größere Anlagen, entweder fossil befeuerte Kesselanlagen, wahlweise auch als Kombinationen mit Kraft-Wärme-Kopplungsanlagen oder regenerativen Anlagenteilen, wie beispielsweise solarthermischen Anlagen. Sie bestehen somit aus mehreren unterschiedlichen Geräten, Komponenten und Zubehörteilen, als Peripherie um mindestens einem Wärme- und/oder Kälteerzeuger. Dazu zählen zum Beispiel Wärmetauscher, Brenner, Pumpen, Gebläse, Stellantriebe, Ventile, Sensoren, Armaturen auf der Heizmedium- und auf der Feuerungsseite sowie elektrotechnische Komponenten.

Derartige Wärme- und/oder Kälteerzeugungssysteme sind relativ wartungsintensiv, auch weil sich im Systemverbund sehr unterschiedliche Regel-Wartungsintervalle ergeben. Weiterhin werden oftmals erhöhte Anforderungen bezüglich geringer Ausfallzeiten an diese Systeme gestellt, weil sie größere Nutzungseinheiten mit Heizwärme oder industrielle Bereiche mit Prozesswärme versorgen. Dabei weisen allerdings alle Geräte, Komponenten und Zubehörteile jeweils spezifische Wartungsintervalle auf, welche durch die laufend variierende, verbraucherabhängige Betriebsweise eines Wärme- und/oder Kälteerzeugungssystems über die Zeit variabel sind. Zusätzlich haben die Betreiber gattungsgemäßer Wärme- und/oder Kälteerzeugungssysteme unterschiedliche Wartungsphilosophien. Beispielsweise entweder auf Ausfallsicherheit und höchste Betriebsbereitschaft ausgelegt oder eher kostenorientiert.

Bekannt ist die Überwachung von mindestens für diese Betriebsweise und aktuelle Betriebszustände charakteristischen Geräten, Komponenten und Zubehörteilen durch eine Konditionsmonitoringeinrichtung, wobei mindestens eine Systemregeleinrichtung für die übergeordnete Betriebsführung vorgesehen ist.

Weiterhin sind die durchzuführenden Wartungen bei größeren Wärme- und/oder Kälteerzeugungssystemen sehr unterschiedlich, so dass diese kaum noch, wie bei kleinen Haus-Heizungsanlagen üblich, von einem Universal-Techniker durchgeführt werden können. Speziell ausgebildete Fachkräfte für bestimmte Komponenten und Teilsysteme sind notwendig. Gleiches betrifft auch die Ersatzteilversorgung, da es nicht mehr möglich ist, alle speziellen Teile in einem Servicefahrzeug dabei zu haben. Daher ist im Servicebereich bei gattungsgemäßen Wärme- und/oder Kälteerzeugungssysteme immer Planung- und Logistikaufwand erforderlich, um einerseits die Servicekosten zu optimieren und andererseits auch eine möglichst hohe Verfügbarkeit des Wärme- und/oder Kälteerzeugungssystems zu erreichen.

Der Erfindung liegt daher die Aufgabe zugrunde, ein effektives Verfahren zum Betreiben und Warten eines Wärme- und/oder Kälteerzeugungssystems zu schaffen, mit dem insbesondere sich insbesondere aufwands-, kosten- oder betriebssicherheitsoptimale Wartungspläne ergeben.

Erfindungsgemäß wurde dies mit den Merkmalen des Patentanspruches 1 gelöst. Vorteilhafte Weiterbildungen sind den Unteransprüchen zu entnehmen.

Das Verfahren zum Betreiben und Warten eines Wärme- und/oder Kälteerzeugungssystems ist **dadurch gekennzeichnet, dass** auf Basis von kunden- und anlagenspezifischen Informationen in der Systemregeleinrichtung laufend und dynamisch optimale Wartungspläne erstellt und angezeigt werden.

In einer vorteilhaften Ausgestaltung der Erfindung sind in einer Systemstückliste in der Systemregeleinrichtung die wartungsrelevanten Daten zusammengefasst. Insbesondere für Geräte, Komponenten und Zubehörteile mit jeweils gesetzlich vorgeschriebenen und/oder empfohlenen Wartungszyklen, Laufzeiten und Betriebsbedingungen der Anlage. Damit werden jeweils unterschiedliche Regelwartungsintervalle, welche indirekt über Verschleißverhalten, Betriebszeiten und Betriebsbedingungen der Anlage zusätzlich und unbeeinflussbar verändert werden, effektiv synchronisiert.

Vorteilhafte eise sind in einer Systemstückliste in der Systemregeleinrichtung servicerelevante Daten vorgebbar. Dazu gehören Fixkosten für einen Servicebesuch, Anfahrtsweg und Anfahrtskosten, Wartungsvertragsmerkmale, Kosten der regulär fälligen Austauschteile.

Erfindungsgemäß werden einzelne Wartungen optimiert zu einer Sammelwartung zusammengefasst, indem optimale Wartungscluster anlagen- und kundenspezifisch ermittelt werden. Dabei sollen bewusst Wartungspläne flexibel aufgebrochen werden, um weitere Optimierungsmöglichkeiten zu gewinnen.

Vorzugsweise sind die Optimierungskriterien vorgebbar, das heißt mit einer werksseitigen Grundeinstellung einerseits sowie vom Bedienpersonal und/oder dem Anlagenbetreiber, zum Beispiel über Fernsteuerung, andererseits. In einer ersten Ausführungsform erfolgt eine Optimierung auf die Wartungskosten über einen vorgebbaren Zeitraum. In einer zweiten Ausführungsform ist alternativ oder ergänzend dazu als Optimierungskriterium die Ausfallsicherheit maßgebend. Weiterhin kann in einer dritten, ebenfalls alternativen oder ergänzenden Variante, als Optimierungskriterium die Zusammenstellung einer möglichst umfangreichen, möglichst viele einzelne Teilwartungen beinhaltende Sammelwartung vorrangig in die Strategie der Systemregeleinrichtung für die übergeordnete Betriebsführung einfließen, welche die Wartungspläne generiert und aktualisiert.

Mit einer vorteilhaften Ausgestaltung der Erfindung ist für die Auslösung einer Aufstellung und Anzeige eines Wartungsplanes für eine Sammelwartung maßgebend, dass die Nähe eines Wärmeerzeugungssystems zu einem Reiseweg eines Servicetechnikers gegeben ist. Dabei ist ein automatischer Abgleich zwischen der Routenplanung des Servicetechnikers und den Standorten von Wärme- und/oder Kälteerzeugungssystemen sowie deren aktuell und/oder zukünftig notwendigen einzelnen Wartungen vorgesehen.

Bei noch einer weiteren vorteilhaften Ausgestaltung der Erfindung ist für die Auslösung einer Aufstellung eines Wartungsplanes für eine Sammelwartung vorgesehen, dass mittels Informationen über die Betriebsweise des Wärme- und/oder Kälteerzeugungssystems und Angaben über Schadenshäufigkeit oder Auffälligkeiten gegenüber dem Durchschnitt gleichartiger Wärme- und/oder Kälteerzeugungssysteme die Wartungsnotwendigkeit extrapoliert und proaktiv eine Wartung über die Systemregeleinrichtung vorgeschlagen wird.

Mit dem erfindungsgemäßen Verfahren wird ein effektives Verfahren zum Betreiben und Warten eines Wärme- und/oder Kälteerzeugungssystems zu schaffen, mit dem insbesondere sich insbesondere aufwands-, kosten- oder betriebssicherheitsoptimale Wartungspläne ergeben.

Es werden somit die Wartungspläne, insbesondere für komplexe Großanlagen, kundenspezifisch erstellt und hierbei die Ciptimierungskriterien zur Erstellung der Wartungspläne für einen Bediener bzw. Betreiber auswählbar gemacht. Zudem können die Wartungspläne einzelner Geräte aufgebrochen werden und die resultierenden Teilwartungen so mit Teilwartungen anderer Geräte kombiniert werden, dass sich aufwands-, kosten- oder betriebssicherheitsoptimale Wartungspläne der gesamten Anlage ergeben. Erfindungsgemäß wird beispielsweise auch die Tatsache dabei berücksichtigt, dass ein Betrieb eines Gerätes oder einer Komponente nicht erst ab dem Kaufdatum, sondern erst ab der Inbetriebnahme, also auch als Ersatzteil, startet.

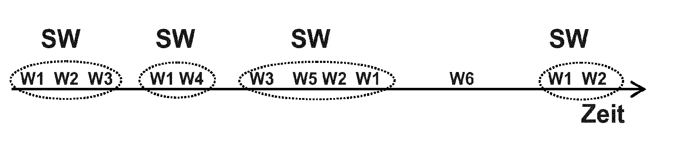

Die Zeichnung stellt in einer einzigen Figur ein Ausführungsbeispiel der Neuerung dar und zeigt bei einem Wärme- und/oder Kälteerzeugungssystem notwendige Wartungsintervalle auf einem Zeitstrahl.

Aufgetragen sind einzelne Wartungen W1...W6 in unterschiedlicher Folge und in unterschiedlich langen Intervallen. Einzelne Wartungen W1...W6 werden auf Basis von kunden-und anlagenspezifischen Informationen in der Systemregeleinrichtung dynamisch in optimalen Wartungsplänen verarbeitet, so dass Sammelwartungen SW als Zusammenfassung von einzelnen Wartungen W1...W6 entstehen.

Bei der Erfindung handelt es sich um eine dynamische Optimierung einer Funktion, die entsprechend der Zieloptimierung formuliert wird. Soll zum Beispiel nach Kosten optimiert werden, so werden die Teilkosten auf dem Zeitstrahl den jeweiligen einzelnen Wartungen W1...W6 zugeordnet. Zusätzlich werden für mögliche Sammelwartungen SW, die zum Beispiel über evolutionsalgorithmische Verfahren konstruiert werden, die Fixkosten zugeordnet, die sich aus einer Anfahrt von Servicepersonal ergeben. Zudem werden die Kosten eines Herunterfahrens des Wärme- und/oder Kälteerzeugungssystems berücksichtigt, bei Bedarf auch mit der Zeitdauer einer einzelnen Wartung W1...W6. Der Algorithmus errechnet für alle möglichen Varianten die Gesamtkosten, beispielsweise über einen definierten Zeitraum, und schlägt auf diesem Weg optimale Sammelwartungen SW vor.

Auf gleichem Wege werden je nach Vorgabe andere Optimierungsrichtungen oder Randbedingungen berücksichtigt.

## Patentansprüche

1. Verfahren zum Betreiben und Warten eines Wärme- und/oder Kälteerzeugungssystems, bestehend aus mehreren Geräten, Komponenten und Zubehörteilen, insbesondere mit mindestens einem Wärme- und/oder Kälteerzeuger, wobei alle Geräte, Komponenten und Zubehörteile jeweils einzelne, spezifische Wartungsintervalle (W1...W6) aufweisen, welche durch die variierende, verbraucherabhängige Betriebsweise eines Wärme- und/oder Kälteerzeugungssystems über die Zeit variabel sind, wobei mindestens für diese Betriebsweise und aktuelle Betriebszustände charakteristische Geräte, Komponenten und Zubehörteile von einer Konditionsmonitoringeinrichtung überwacht werden, und wobei mindestens eine Systemregeleinrichtung für die übergeordnete Betriebsführung vorgesehen ist,
**dadurch gekennzeichnet, dass** auf Basis von kunden- und anlagenspezifischen Informationen in der Systemregeleinrichtung dynamisch optimale Wartungspläne erstellt und angezeigt werden.

2. Verfahren nach Anspruch 1,
**dadurch gekennzeichnet, dass** in einer Systemstückliste in der Systemregeleinrichtung die wartungsrelevanten Daten zusammengefasst sind, insbesondere für Geräte, Komponenten und Zubehörteile mit jeweils gesetzlich vorgeschriebenen und/oder empfohlenen Wartungszyklen, Laufzeiten und Betriebsbedingungen der Anlage.

3. Verfahren nach Anspruch 1 oder 2,
**dadurch gekennzeichnet, dass** in einer Systemstückliste in der Systemregeleinrichtung servicerelevante Daten vorgebbar sind, wie Fixkosten für Servicebesuch, Anfahrtsweg und Anfahrtskosten, Wartungsvertragsmerkmale, Kosten der regulär fälligen Austauschteile.

4. Verfahren nach einem der Ansprüche 1 bis 3,
**dadurch gekennzeichnet, dass** einzelne Wartungen (W1...W6) optimiert zu einer Sammelwartung (SW) zusammengefasst werden.

5. Verfahren nach einem der Ansprüche 1 bis 4,
**dadurch gekennzeichnet, dass** als Optimierungskriterium die Wartungskosten über einen vorgebbaren Zeitraum maßgebend sind.

6. Verfahren nach einem der Ansprüche 1 bis 5,
**dadurch gekennzeichnet, dass** als Optimierungskriterium die Ausfallsicherheit maßgebend ist.

7. Verfahren nach einem der Ansprüche 1 bis 6,
**dadurch gekennzeichnet, dass** als Optimierungskriterium die Zusammenstellung einer möglichst umfangreichen, möglichst viele einzelne Teilwartungen (W1...W6) beinhaltende Sammelwartung (SW) maßgebend ist.

8. Verfahren nach einem der Ansprüche 1 bis 7,
**dadurch gekennzeichnet, dass** die Auslösung einer Aufstellung eines Wartungsplanes für eine Sammelwartung (SW) dadurch erfolgt, dass die Nähe eines Wärme-und/oder Kälteerzeugungssystems zu einem Reiseweg eines Servicetechnikers maßgebend ist, wobei ein automatischer Abgleich zwischen der Routenplanung des Servicetechnikers und den Standorten von Wärme- und/oder Kälteerzeugungssystemen sowie deren aktuell und/oder zukünftig notwendigen einzelnen Wartungen (W1...W6) vorgesehen ist.

9. Verfahren nach einem der Ansprüche 1 bis 8,
**dadurch gekennzeichnet, dass** die Auslösung einer Aufstellung eines Wartungsplanes für eine Sammelwartung (SW) dadurch erfolgt, dass mittels Informationen über die Betriebsweise des Wärme- und/oder Kälteerzeugungssystems und Angaben über Schadenshäufigkeit oder Auffälligkeiten gegenüber dem Durchschnitt gleichartiger Wärme- und/oder Kälteerzeugungssysteme die Wartungsnotwendigkeit extrapoliert und proaktiv eine Wartung vorgeschlagen wird.
